# EUROPÄISCHE PATENTSCHRIFT

(11) **EP 0 790 612 B1**
(45) Veröffentlichungstag und Bekanntmachung des Hinweises auf die Patenterteilung: **04.08.1999**
(21) Anmeldenummer: 97102195.1
(22) Anmeldetag: 06.06.1994
(51) Int. Cl.: G11B 17/22

(54) **Plattenabspielgerät**
Disc reproducing apparatus
Lecteur de disques

(30) Priorität: 12.06.1993 DE 4319551
(43) Veröffentlichungstag der Anmeldung: 20.08.1997
(62) Teilanmeldung aus: 94916888.4
(73) Patentinhaber: NSM AKTIENGESELLSCHAFT, 55411 Bingen (DE)
(72) Erfinder: Menke, Wilhelm, 55411 Bingen (DE); Heidersberger, Börge, 55411 Bingen (DE)
(74) Vertreter: Becker, Bernd, Dipl.-Ing.

(56) Entgegenhaltungen:
- EP-A- 0 138 005
- EP-A- 0 479 626
- WO-A-90/04845
- WO-A-92/13343
- DE-A- 4 005 058
- DE-A- 4 205 912
- GB-A- 2 164 781
- GB-A- 2 209 620
- US-A- 4 275 425

## Beschreibung

Die Erfindung bezieht sich auf ein Plattenabspielgerät mit zwei einander gegenüberliegenden Plattenmagazinen, die eine Vielzahl übereinanderliegend in Aufnahmefächern gelagerter, jeweils eine Platte aufnehmender Plattenhalter aufweisen, und mit einer in Stapelrichtung der Plattenmagazine mittels eines Antriebs auf einer Tragstange verfahrbaren Transporteinrichtung zum Austausch einer gewünschten Platte mit dem zugehörigen Plattenhalter zwischen dem Aufnahmefach und einer Abspieleinheit, wobei die Transporteinrichtung eine horizontal verfahrbare, einen Schlitten mit einem Greifarm aufweisende Auszugeinrichtung umfaßt.

Aus der EP 0 138 005 B1 ist eine Plattenwechselvorrichtung bekannt, bei der zwischen zwei vertikalen Plattenhüllen mit Platten speichernden Plattenmagazinen eine vertikal verfahrbare Plattenentnahmevorrichtung angeordnet ist, die einen auf dieser horizontal verfahrbaren Plattenhüllengreifer trägt. Dieser Plattenhüllengreifer ist mit zwei Greifeinrichtungen versehen, von denen sich wahlweise eine in ihrer Bereitschaftsposition in dem linken oder rechten Plattenmagazin befindet, während die andere Greifeinrichtung eine entnommene Plattenhülle in der Mittenposition hält, in der sich die Platte oberhalb des Plattentellers des Abspielgerätes befindet. Jedem Plattenmagazin ist sonach eine gesonderte Greifeinrichtung zugeordnet. Jede Greifeinrichtung umfaßt jeweils zwei Hakenelemente, die elektromagnetisch betätigbar sind, wenn die Plattenentnahmevorrichtung in einer ersten Position oder einer zweiten Position zur Entnahme einer Plattenhülle aus dem ersten bzw. dem zweiten Plattenmagazin steht. Sonach bedingt zum einen die Anordnung zweier Greifeinrichtungen und zum anderen die mechanische Steuerung der beweglichen Greifeinrichtungen einen erheblichen fertigungstechnischen Aufwand.

Weiterhin offenbart die EP 0 280 263 A2 ein Plattenabspielgerät, bei dem die Platten in zwei Stapeln abgelegt werden und in zwei Abspielstationen abgespielt werden können. Die einzelnen Platten können von zwei Seiten abgespielt werden. Sie werden nach dem Abspielen nicht mehr in denselben Stapel zurückgelegt. Bei diesem Gerät ist ein unendliches Förderband als Auszugeinrichtung ausgebildet. Die Stellung der Auszugeinrichtung kann bei diesem Gerät nicht zur Kontrolle der Plattenposition herangezogen werden. Bei geringsten Unregelmäßigkeiten im Transport der Platten, beispielsweise bei der Abgabe der Platten aus dem Abspielgerät oder durch Erschütterungen der Anlage, sind daher Störungen des Betriebes zu erwarten.

Ferner zeigt die EP 0 439 483 B1 ein Plattenabspielgerät nach dem Oberbegriff des Anspruchs 1 mit zwei einander gegenüberliegenden Plattenmagazinen mit einer in Stapelrichtung der Plattenmagazine bewegbaren Transporteinrichtung zur Hin- und Her-Beförderung einer Platte zwischen den Plattenmagazinen und einer Abspieleinheit und mit zwei unabhängig voneinander steuerbaren, auf der Transporteinrichtung horizontal verfahrbaren Auszugeinrichtungen mit jeweils einem Greifarm. Jeder Greifarm ist in einem hin- und herbeweglichen Schlitten ein- und ausfahrbar gelagert und in der Ausgangsstellung des Schlittens durch einen federbelasteten Winkelhebel mit zugeordnetem Anschlaghebel in seiner eingefahrenen Stellung derart gehalten, daß er bei einer Bewegung des Schlittens aus der Ausgangsstellung von dem Winkelhebel in die ausgefahrene, in eine Ausnehmung eines Plattenhalters für eine Platte eingreifende Stellung bringbar ist. Demzufolge ist jedem Plattenmagazin ein bewegbarer, gesondert zu steuernder Greifarm zugeordnet, was eine relativ aufwendige Konstruktion bedingt.

Schließlich ist aus der DE 40 05 058 Al ein Plattenabspielgerät bekannt, bei dem ein Antriebsmotor zur horizontalen Bewegung des Schlittens einer Transporteinrichtung durch eine Schraubenspindel in Verbindung mit einer parallel dazu angeordneten Führungsstange vorgesehen ist. Zusätzlich umfaßt diese Plattenabspielgerät einen weiteren Antriebsmotor für die vertikale Bewegung des Schlittens der Transporteinrichtung, wobei mehrere aufwendige und platzintensive Übersetzungsgetriebe und Umlenkrollen verwendet werden, die zumindest teilweise im Arbeitsbereich der Transporteinrichtung angeordnet sind.

Der Erfindung liegt die Aufgabe zugrunde, ein Plattenabspielgerät der eingangs genannten Art zu schaffen, das für die Beförderung eines Plattenhalters mit der gewünschten Platte von dem jeweiligen Plattenmagazin zu der jeweiligen Abspieleinheit und zurück einen einfachen und kompakten Aufbau ermöglicht.

Diese Aufgabe wird erfindungsgemäß dadurch gelöst, daß die Tragstange drehbar angetrieben ist und über ein Getriebe den mit dem Greifarm starr verbundenen Schlitten der Auszugeinrichtung antreibt.

Durch diese Maßnahmen ergibt sich ein auf kleinstem Raum unterzubringendes Antriebssystem für die Transporteinrichtung und die Auszugeinrichtung, wobei die Betätigung der Transporteinrichtung und der Auszugeinrichtung ohne innerhalb der Transporteinrichtung angeordnete, elektrische Antriebselemente erfolgt. Ein besonderer wesentlicher Vorteil liegt in der Möglichkeit, mit einem einzigen Greifarm sowohl eine Platte aus dem einen als auch aus dem anderen Plattenmagazin zu befördern, woraus insgesamt eine verhältnismäßig kleine Baugröße des Plattenabspielgerätes resultiert. Hierbei sind keine elektrischen Aktoren, Sensoren und Schleppkabel an der Transporteinrichtung erforderlich. Eine weitere wesentliche Vereinfachung ergibt sich durch die starre Befestigung des Greifarms an dem Schlitten der Auszugeinrichtung, da hierdurch eine gesonderte Verschwenk- oder Verschiebeeinrichtung für den Greifarm in Bezug auf seine Lage zur Auszugeinrichtung entfällt. Der Greifarm wird also bei der Auswahl einer bestimmten Platte von einer Steuereinheit des Plattenabspielgerätes so gesteuert, daß er zunächst in das Plattenmagazin fährt, in welchem sich die ausgewählte Platte befindet, und dann innerhalb dieses Plattenmagazins bis zu der Position der ausgewählten Platte verfahren, in der der Greifer den Plattenhalter mit der ausgewählten Platte aus dem Plattenmagazin entnehmen kann. Anschließend befördert der Greifarm den Plattenhalter mit der ausgewählten Platte in eine zu dem Plattenteller der Abspieleinheit ausgerichtete Position auf der Transporteinrichtung, die die Platte dann der Abspieleinheit zuführt. Nach dem Abspielen der Platte wird diese wieder mit Hilfe der Transporteinrichtung und des Greifarmes in dem betreffenden Plattenmagazin abgelegt.

Bei einer weiteren Ausgestaltung der Erfindung ist die gleitbeweglich auf der Tragstange gelagerte Transporteinrichtung über einen Riemenantrieb mit drehrichtungsumkehrbarem Antriebsmotor auf- und abbewegbar. Selbstverständlich kann statt des Riemenantriebes auch ein Seilzug-, Spindelantrieb oder dergleichen eingesetzt werden.

Um eine zuverlässige Führung der Transporteinrichtung zu erzielen, weist nach einer Weiterbildung der Erfindung die Transporteinrichtung seitlich einen Einschnitt auf, der gleitbeweglich eine vertikale, gehäusefeste Führungsstange umgreift.

Bevorzugt trägt der Antriebsmotor der Transporteinrichtung auf seiner Welle eine Codescheibe, die mit einem Positionsimpulse erzeugenden Sensor zusammenwirkt. Dadurch ist ein teilungsgenaues Halten der Transporteinrichtung vor den Aufnahmefächern der Plattenmagazine gewährleistet. Zweckmäßigerweise ist der Transporteinrichtung ein Sensor zur Feststellung ihrer Ausgangsstellung unmittelbar oberhalb der Abspieleinheit zugeordnet.

Zur Erreichung eines sicher funktionierenden Antriebs des Greifarms steht nach einer weiteren Ausgestaltung der Erfindung die drehbeweglich gelagerte Tragstange der Transporteinrichtung über eine Rutschkupplung und das Getriebe mit dem drehrichtungsumkehrbaren Antriebsmotor in Verbindung, und die Tragstange trägt innerhalb der Transporteinrichtung ein auf ihr verschiebbares, drehfestes Zahnrad, das mit mindestens einem Zahnrad kämmt, das mit einer am Schlitten des Greifarms angebrachten Zahnstange in Eingriff steht.

Zweckmäßigerweise ist die Tragstange mit einer Codescheibe fest verbunden, die durch ortsfeste Sensoren zur Erzeugung von Schaltimpulsen für den Antriebsmotor der Tragstange läuft. Bevorzugt ist die Codescheibe als Loch oder Markierungsscheibe ausgebildet.

Nach einer vorteilhaften Weiterbildung der Erfindung umfaßt die Plattenhalter-Erkennungseinrichtung einen im Gehäuse der Transporteinrichtung federbelastet geführten, in die Bewegungsbahn des Plattenhalters vorstehenden mechanischen Fühler, der bei einer Beaufschlagung durch den Plattenhalter die Drehbewegung des auf der Tragstange angeordneten Zahnrades begrenzt. Hierbei ist zweckmäßigerweise auf der Oberseite des auf der Tragstange angeordneten Zahnrades ein Stift vorgesehen, der im nichtbetätigten Zustand des Fühlers durch einen Durchgang in der Unterseite des Fühlers bewegbar ist und der im betätigten Zustand des Fühlers in der Zentrierstellung des Plattenhalters zu der Abspieleinheit an einem in den Durchgang hineinragenden Anschlag anliegt. Weiterhin weist der Fühler bevorzugt auf seiner Oberseite im vorderen Bereich einen Steg auf, der im nichtbetätigten Zustand des Fühlers federbelastet an einem gehäusefesten Anschlag anliegt. Zweckmäßigerweise liegt dem gehäusefesten Anschlag für den Steg des Fühlers ein gehäusefester Anschlag im Bereich der Tragstange gegenüber, an dem sich eine Druckfeder abstützt, die mit ihrem anderen Ende an dem Steg des Fühlers anliegt.

Damit der Fühler einen von der Transporteinrichtung aufgenommenen Plattenhalter erkennen kann, übergreift in Ausgestaltung der Erfindung der auf einer Halterung geführte Fühler mit seinem vorderen Bereich eine gehäusefeste Führungsschiene für den Plattenhalter.

Zur sicheren Aufnahme eines Plattenhalters in der Transporteinrichtung weist bei einer weiteren vorteilhaften Ausgestaltung des Erfindungsgegenstandes das Gehäuse der Transporteinrichtung einen Tragarm mit einer der gehäusefesten Führungsschiene gegenüberliegenden Halteschiene für den Plattenhalter auf, wobei der Halteschiene mindestens ein Federelement zugeordnet ist, das den Plattenhalter in seiner Zentrierstellung zur Abspieleinheit sichert. Zweckmäßigerweise ist das Federelement an der Halteschiene angespritzt und rastet in einen zugehörigen Einschnitt des Plattenhalters ein. Alternativ hierzu besteht bevorzugt das Federelement aus einem U-förmigen Bügel, dessen Schenkel in Vertiefungen am Tragarm eingesetzt sind und dessen Steg mittig eine Sicke aufweist, die in einen an der entsprechenden Längsseite des Plattenhalters liegenden Einschnitt eingreift.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der dieser Erfindung zugrunde liegende Gedanke wird in der nachfolgenden Beschreibung anhand eines Ausführungsbeispieles, das in der Zeichnung dargestellt ist, näher erläutert. Es zeigt:

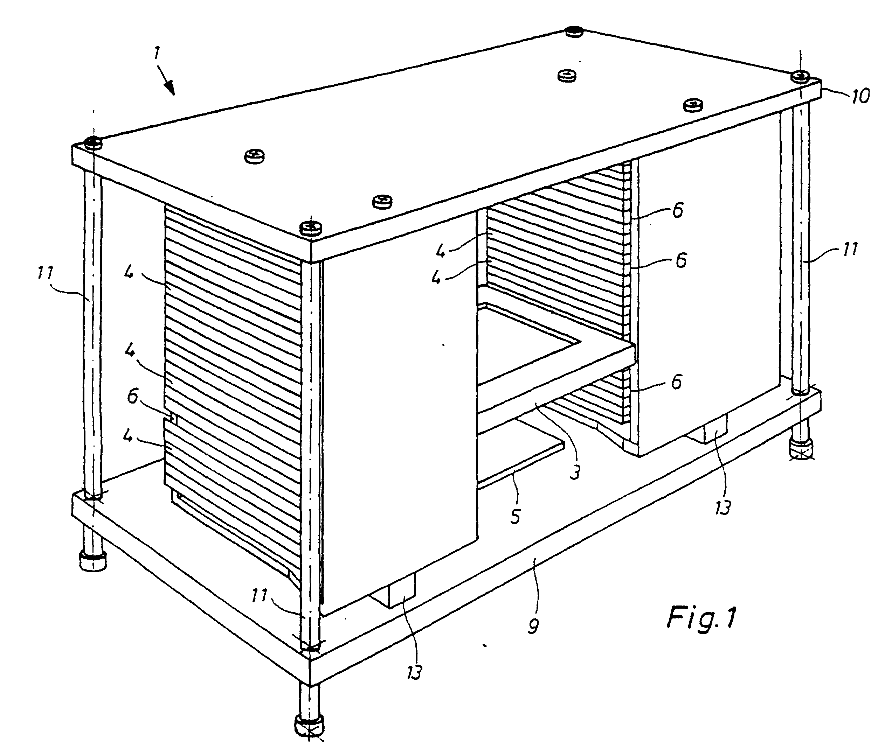

- Fig. 1: eine perspektivische Ansicht eines Plattenabspielgerätes,
- Fig. 2: einen Querschnitt durch das Plattenabspielgerät nach Fig. 1,

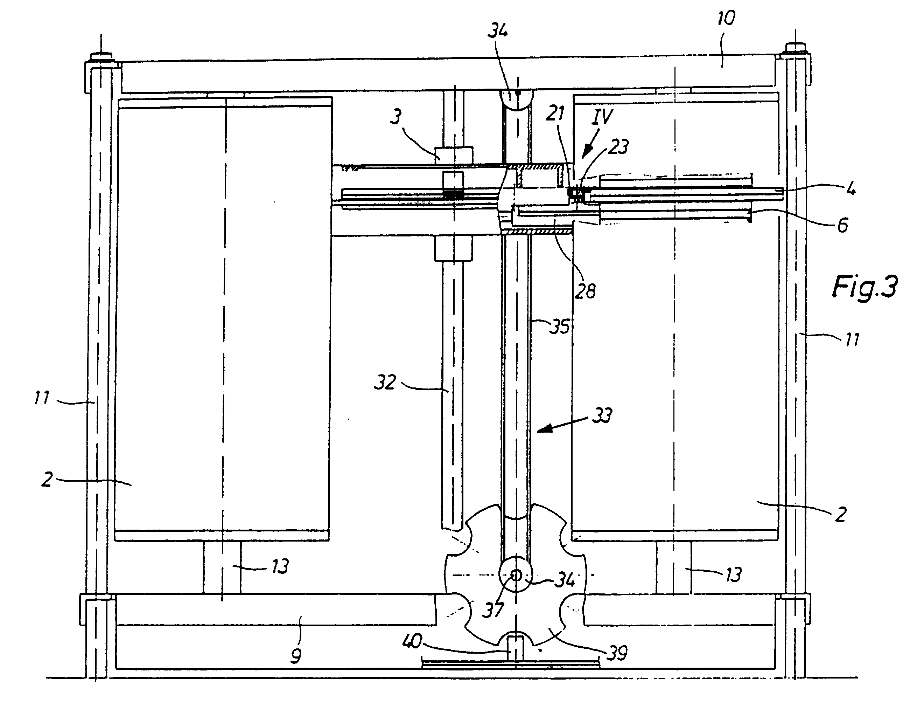

- Fig. 3: eine Rückansicht des Plattenabspielgerätes nach Fig. 1,

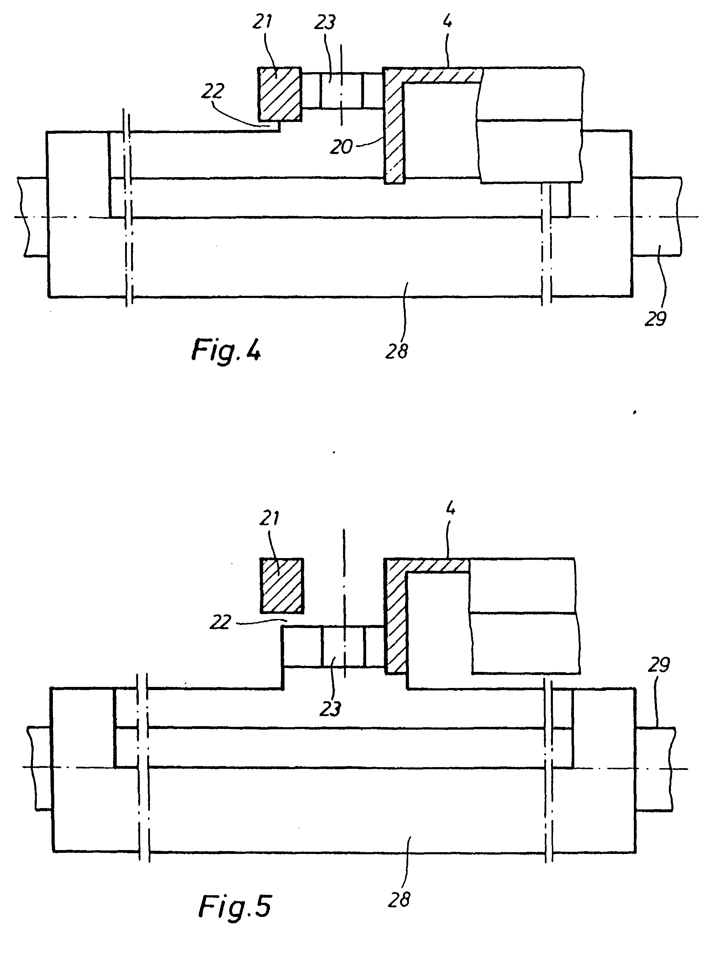

- Fig. 4: eine vergrößerte Darstellung der Einzelheit IV mit in der Auszugposition befindlichem Greifarm,
- Fig. 5: die Darstellung nach Fig. 4 mit in der Auswahlposition befindlichem Greifarm,

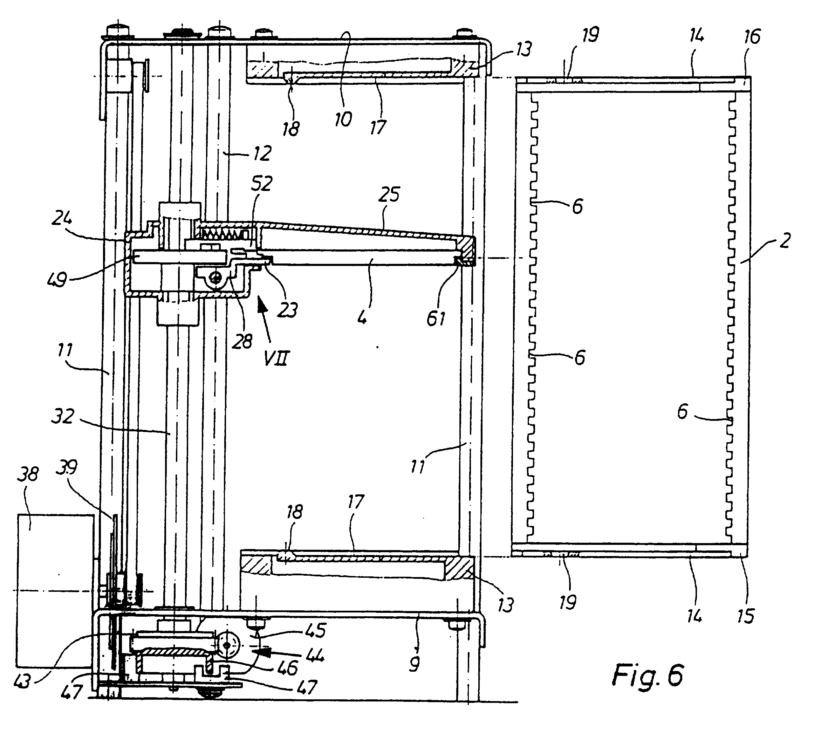

- Fig. 6: einen Längsschnitt durch das Plattenabspielgerät nach Fig. l mit herausgenommenem Plattenmagazin,

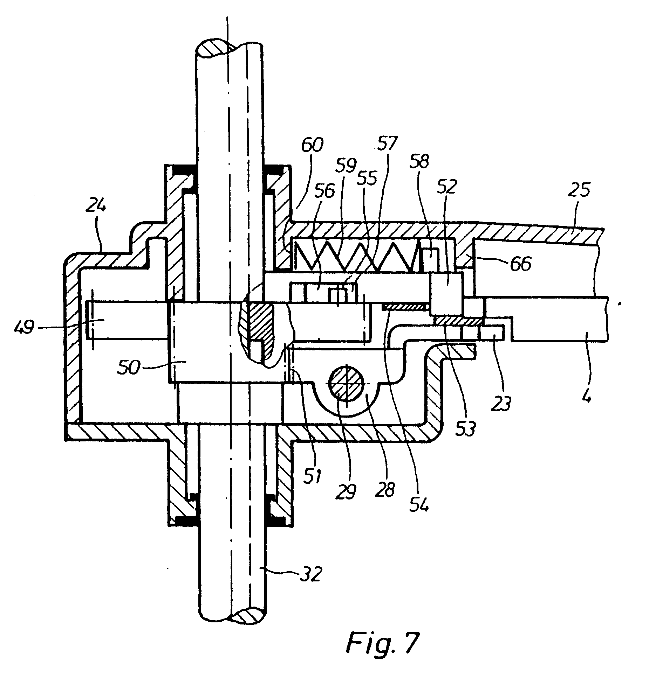

- Fig. 7: eine vergrößerte Darstellung der Einzelheit VII nach Fig. 6 mit in der Transporteinrichtung befindlichem Plattenhalter und

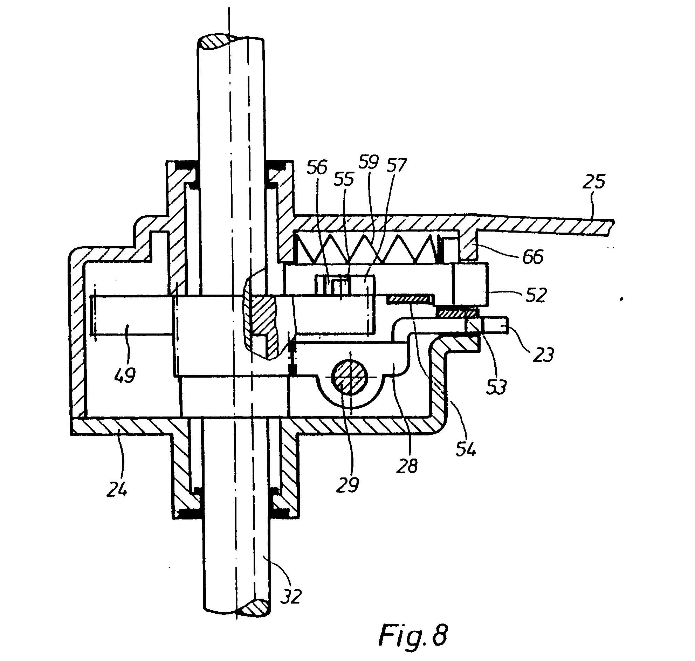

- Fig. 8: die Darstellung nach Fig. 7 ohne Plattenhalter.

Das mit einer nicht dargestellten zentralen Steuereinheit ausgerüstete Plattenabspielgerät, durch das auf den Platten gespeicherte Informationen ausgelesen und wiedergegeben werden können, besitzt ein Gehäuse 1 mit einer zugeordneten, nicht dargestellten Bedienungstafel, die verschiedene Tasten aufweist, beispielsweise eine Plattenauswahltaste, eine Plattenabspieltaste und eine Stopptaste. Seitlich im Gehäuse 1 sind gegenüberstehend Plattenmagazine 2 angeordnet. In dem Raum zwischen den Plattenmagazinen 2 befindet sich eine aufund abverfahrbare Transporteinrichtung 3 für einen eine Platte aufnehmenden Plattenhalter 4. Eine Abspieleinheit 5 mit im einzelnen nicht dargestelltem Plattenteller, Motor zur Drehung des Plattentellers und Abspielkopf ist feststehend zwischen und unterhalb der beiden gegenüberliegenden Plattenmagazine 2 angebracht.

Die Plattenmagazine 2 sind untereinander identisch aufgebaut und besitzen jeweils eine Vielzahl übereinanderliegend angeordneter Aufnahmefächer 6 für die Lagerung einer entsprechenden Anzahl an je eine Platte aufnehmender Plattenhalter 4. In dem Aufnahmefach 6 ist der Plattenhalter 4 durch mindestens ein am Plattenmagazin 2 angebrachtes Federelement 7 in seiner Lage gesichert. In dieser Lage steht der Plattenhalter 4 soweit über den beiden möglichen Auszugseiten des Plattenmagazins 2 über, daß er von einer Auszugeinrichtung 8 der Transporteinrichtung 3 erfaßt werden kann. Jedes Plattenmagazin 2 ist auswechselbar von der Vorderseite des Gehäuses 1 her schubfachartig in das Gehäuse 1 eingesetzt. Das Gehäuse 1 besteht aus einer rechteckförmigen Bodenplatte 9 und einer dazu im bestimmten Abstand liegenden, rechteckförmigen Deckenplatte 10, die durch an den Ecken angeordnete, als Stangen ausgebildete Verbindungselemente 11 miteinander verbunden sind. Die Deckenplatte 10 ist abnehmbar und die Verbindungselemente 11 sind in ihrer Länge austauschbar, so daß verschieden hohe Plattenmagazine 2 zum Einsatz kommen können. Des weiteren erstreckt sich zwischen der Bodenplatte 9 und der Deckenplatte 10 ein als Stange ausgebildetes Stabilisierungselement 12, um die Steifigkeit des Gehäuses 1 zu erhöhen. Auf der Innenseite der Bodenplatte 9 und auf der Innenseite der Deckenplatte 10 sind gegenüberliegend Führungsschienen 13 für jedes Plattenmagazin 2 angeordnet, die mit einer entsprechenden Nut 14 in der Bodenwand 15 bzw. in der Deckenwand 16 des Plattenmagazins 2 korrespondieren. In Einschubrichtung des Plattenmagazins 2 ist in jede Führungsschiene 13 eine Klipszunge 17 mit vorstehender Klipsnase 18 eingeformt, die im eingeschobenen Zustand des Plattenmagazins 2 in eine zugehörige Öffnung 19 in der Bodenwand 15 bzw. in der Deckenwand 16 des Plattenmagazins 2 einrastet. Beim Herausnehmen des Plattenmagazins 2 aus dem Gehäuse 1 lösen sich die Klipsverbindungen selbsttätig.

Der Plattenhalter 4 weist an seiner der Transporteinrichtung 3 zugewandten Seite jeweils im Endbereich eine durchgehende Ausnehmung 20 auf. An jede Ausnehmung 20 schließt sich nach außen hin eine auf halber Höhe des Plattenhalters 4 von unten her abgesetzte Beförderungsnase 21 an, unter der sich sonach ein freier Durchgang 22 zu der Ausnehmung 20 hin befindet. In eine der Ausnehmungen 20 kann entsprechend der Lage des Plattenhalters in dem einen oder anderen Plattenmagazin 2 durch den Durchgang 22 ein Greifarm 23 der Auszugeinrichtung 8 der Transporteinrichtung 3 fahren. Durch entsprechende Steuerung der Transporteinrichtung 3 ist der Greifarm 23 dann in den übereinander liegenden Ausnehmungen 20 des Plattenmagazins 4 soweit vertikal verfahrbar, bis der Greifarm hinter der Beförderungsnase 21 des Plattenhalters 4 mit der ausgewählten Platte steht. Anschließend befördert der Greifarm 23 durch entsprechende Ansteuerung der Auszugeinrichtung 8 aufgrund seiner Anlage an der Beförderungsnase 21 den Plattenhalter 4 auf einen am Gehäuse 24 der Transporteinrichtung 3 angebrachten Tragarm 25, wobei der Verfahrweg des Greifarms 23 über eine der Transporteinrichtung 3 zugeordnete Plattenhalter-Erkennungseinrichtung 26 so gesteuert wird, daß der Plattenhalter 4 eine die ausgewählte Platte konzentrisch zu dem Plattenteller der Abspieleinheit 5 festlegende Zentrierposition einnimmt. Anschließend befördert die Transporteinrichtung 3 den Plattenhalter 4 zu der Abspieleinheit 7, in der dann die Informationsauslesung der Platte erfolgt. Nach Beendigung der Informationsauslesung wird die Platte mit dem Plattenhalter 4 in analoger Weise von der Transporteinrichtung 3 in ihr zugehöriges Aufnahmefach 6 zurück befördert. Dann fährt die Transporteinrichtung 3 in ihre Ausgangsstellung unmittelbar oberhalb der Abspieleinheit 5, wobei die Ausgangsstellung über einen Sensor 27 überwacht wird.

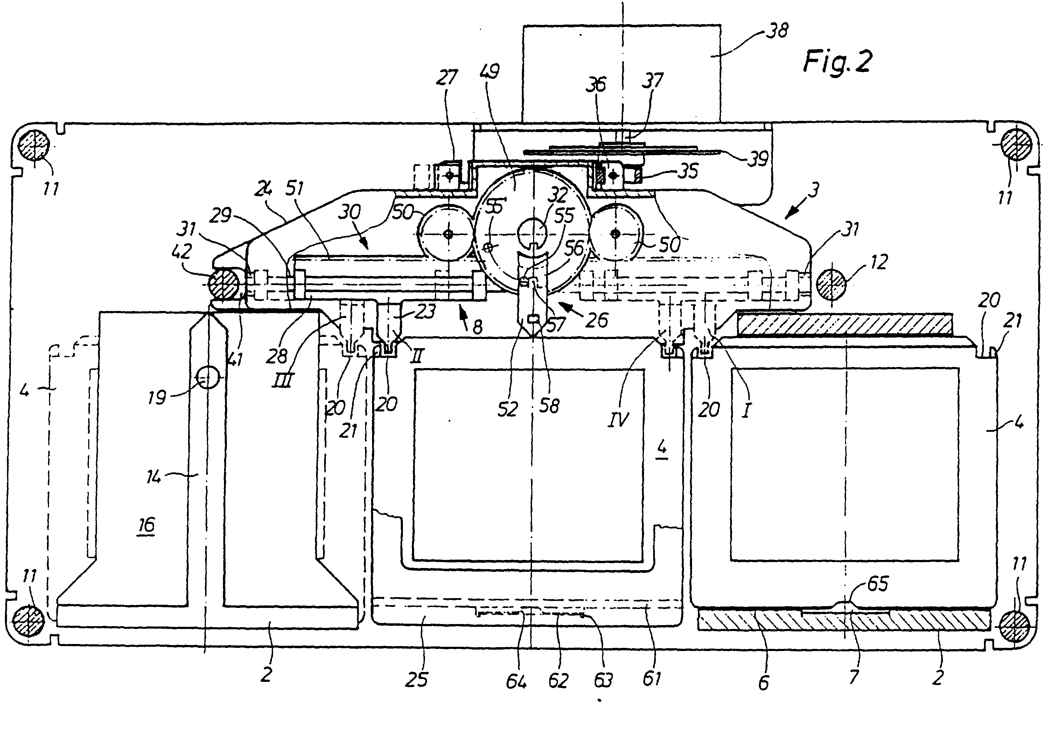

Der Greifarm 23 ist starr an einem Schlitten 28 angeformt, der auf einer im Gehäuse 24 der Transporteinrichtung 3 angeordneten Tragstange 29 mittels eines Antriebs 30 hin- und herbeweglich ist. Endseitig trägt die Tragstange 29 jeweils einen Anschlag 31 für den Schlitten 28. In Figur 2 sind vier mögliche Endstellungen I bis IV des Schlittens 28 eingezeichnet. Die Endstellung I des Schlittens 28 wird durch die Anlage des Schlittens 28 an dem rechten Anschlag 31 der Tragstange 29 bestimmt, in der der Greifarm 23 vertikal in den übereinander liegenden Ausnehmungen 20 des rechten Plattenmagazins 4 verfahrbar ist. Nimmt der Greifarm 23 eine Auszugsposition hinter der Beförderungsnase 21 des die ausgewählte Platte enthaltenden Plattenhalters 4 ein, dann fährt der Schlitten 28 in die Endstellung II, die durch die Plattenhalter-Erkennungseinrichtung 26 bestimmt wird und in der der Plattenhalter 4 zu der Abspieleinheit 5 ausgerichtet ist. Nimmt demgegenüber der im rechten Plattenmagazin 2 befindliche Greifarm 23 die Position hinter einem freien Durchgang 22 eines Plattenhalters 4 ein, dann fährt der Schlitten 28 in die Endposition III, in der der Greifarm 23 in den übereinander liegenden Ausnehmungen 20 der Plattenhalter 4 des linken Plattenmagazins 2 vertikal verfahrbar ist. Nimmt der Greifarm 23 im linken Plattenmagazin 2 eine Position hinter dem freien Durchgang 22 eines Plattenhalters 4 ein, dann kann der Schlitten 28 wieder in die Endposition I fahren. Nimmt dagegen der Greifarm 23 im linken Plattenmagazin 2 eine Stellung hinter der Beförderungsnase 21 eines Plattenhalters 4 ein, dann fährt der Schlitten 28 in die Endposition IV, die durch die Plattenhalter-Erkennungseinrichtung 26 bestimmt wird und in der der Plattenhalter 4 zu der Abspieleinheit 5 ausgerichtet ist.

Im rückwärtigen Bereich des Gehäuses 1 befindet sich mittig hinter den Plattenmagazinen 2 eine vertikal verlaufende Tragstange 32 auf der die Transporteinrichtung 3 über einen Antrieb 3 gleitbeweglich auf- und abbewegbar ist. Der Antrieb 33 umfaßt einen parallel zu der Tragstange 32 verlaufenden, über Umlenkrollen 34 geführten Zahnriemen 35, der über eine Klemmhalterung 36 mit dem Gehäuse 24 der Transporteinrichtung 3 verbunden ist. Die untere Umlenkrolle 34 sitzt auf der Welle 37 eines drehrichtungsumkehrbaren Antriebsmotors 38. Die Welle 37 des Antriebsmotors 38 trägt des weiteren eine als Flügelrad ausgebildete Codescheide 39, deren Flügel in einem als Gabelkoppler ausgebildeten Sensor 40 zur Erzeugung von Positionierimpulsen laufen. Hit Hilfe der Positionierimpulse wird eine exakte Zuordnung der Transporteinrichtung 3 und damit des Greifarmes 23 zu den Beförderungsnasen 21 bzw. zu den Durchgängen 22 der Plattenhalter 4 in den Plattenmagazinen 2 erreicht. Zur Stabilisierung der Transporteinrichtung 3 befindet sich seitlich an dem Gehäuse derselben ein Einschnitt 41, der gleitbeweglich eine sich zwischen der Bodenplatte 9 und der Deckenplatte 10 des Gehäuses 1 erstreckende Führungsstange 42 umgreift.

Die Tragstange 32 ist drehbeweglich in der Bodenplatte 9 und in der Deckenplatte 10 gelagert und unterhalb der Bodenplatte 9 über eine Rutschkupplung 43 und ein Schneckengetriebe 44 mit einem drehrichtungsumkehrbaren Antriebsmotor 45 verbunden. An der Rutschkupplung 43 ist eine als Markierungsscheibe ausgebildete Codescheibe 46 angebracht, die durch ortsfeste, als Gabelkoppler ausgebildete Sensoren 47 zur Erzeugung von Schaltimpulsen für den Antriebsmotor 45 läuft. Mit Hilfe der Codescheibe 46 wird der Antriebsmotor 45 abgeschaltet und die jeweilige Endstellung des Schlittens 28 bzw. des Greifarms 23 überwacht. Auf der Tragstange 32 ist innerhalb des Gehäuses 24 der Transporteinrichtung 3 ein verschiebbares, drehfestes Zahnrad 49 gelagert, das mit zwei gegenüberliegenden ortsfesten Zahnrädern 50 kämmt, die mit einer am Schlitten 28 des Greifarms 23 angebrachten Zahnstange 51 in Eingriff bringbar sind. Durch eine unterschiedliche Drehbewegung der Tragstange 32 wird also die Hin- und Herbewegung des Schlittens 28 erzeugt.

Die Plattenhalter-Erkennungseinrichtung 26 umfaßt einen federbeaufschlagten mechanischen Fühler 52, der in die Bewegungsbahn des auf einer gehäusefesten Führungsschiene 53 der Transporteinrichtung 3 geführten Plattenhalters 4 hineinragt. Der Fühler 52 stützt sich gleitbeweglich auf der Führungsschiene 53, einer gehäusefesten Halterung 54 und dem Zahnrad 49 ab. Auf der Oberseite des Zahnrades 49 befindet sich ein Stift 55, dem ein freier Durchgang 56 in der Unterseite des Fühlers 52 zugeordnet ist. In den Durchgang 56 ragt ein Anschlag 57 hinein, an den rechtsseitig oder linksseitig der Stift 55 im durch den Plattenhalter betätigten Zustand des Fühlers 22 zur Anlage kommt und damit die Drehbewegung des Zahnrades 49 und somit auch die Bewegung des Schlittens 28 in der Endposition II oder IV stoppt, je nachdem von welcher Seite der Stift 55 an den Anschlag 57 anschlägt. Wird der Fühler 52 nicht durch einen Plattenhalter 4 beaufschlagt, dann kann sich der Stift 55 durch den freien Durchgang 56 des Fühlers hindurch bewegen, wodurch das Zahnrad 49 solange angetrieben wird, bis der Schlitten 28 die Endposition I oder III erreicht hat und zwar je nachdem in welcher Drehrichtung das Zahnrad 49 angetrieben wurde. In der in Fig. 2 ausgezogenen Darstellung des Schlittens 28 befindet sich dieser in der Endstellung II, in der der Stift 55 des Zahnrades 49 linksseitig an dem Anschlag 57 des Fühlers 52 anliegt. Ist aus bemessungstechnischen Gründen der Weg des Stiftes 55 von einer linksseitigen Anlage zur rechtsseitigen Anlage an dem Anschlag 57 zu lang, um den Schlitten 28 in der Endstellung IV festzulegen, dann wird auf dem Zahnrad 49 im entsprechenden Abstand zu dem Stift 55 ein weiterer Stift 55' angebracht, der durch seine rechtsseitige Anlage an dem Anschlag 57 die Endstellung IV des Schlittens 28 bestimmt. Der Fühler 52 besitzt auf seiner Oberseite im vorderen Bereich einen Steg 58, an dem sich eine Druckfeder 59 abstützt, deren anderes Ende an einem gehäusefesten Anschlag 60 im Bereich der Tragstange 32 anliegt. Dem Anschlag 60 liegt im entsprechenden Abstand ein gehäusefester Anschlag 66 gegenüber, an den der Steg 58 des Fühlers 52 im unbeaufschlagten Zustand des Fühlers 52 durch den Plattenhalter 4 anliegt.

Der gehäusefesten Führungsschiene 53 der Transporteinrichtung 3 liegt eine am freien Ende des Tragarms 25 befestigte Halteschiene 61 für den Plattenhalter 4 gegenüber. Der Halteschiene 61 ist mittig ein als U-förmiger Bügel ausgebildetes Federelement 62 zugeordnet, dessen Schenkel 63 in Vertiefungen am Tragarm 25 eingesetzt sind und dessen Steg mittig eine Sicke 64 aufweist, die in der Zentrierposition des Plattenhalters 4 zu der Abspieleinheit 5 in einen entsprechenden Einschnitt 65 des Plattenhalters 4 eingreift. Dadurch ist der Plattenhalter in seiner Zentrierposition unverrückbar festgelegt.

## Patentansprüche

1. Plattenabspielgerät mit zwei einander gegenüberliegenden Plattenmagazinen (2), die eine Vielzahl übereinanderliegend in Aufnahmefächern (6) gelagerter, jeweils eine Platte aufnehmender Plattenhalter (4) aufweisen, und mit einer in Stapelrichtung der Plattenmagazine (2) mittels eines Antriebs (33) auf einer Tragstange (32) verfahrbaren Transporteinrichtung (3) zum Austausch einer gewünschten Platte mit dem zugehörigen Plattenhalter (4) zwischen dem Aufnahmefach (6) und einer Abspieleinheit (5), wobei die Transporteinrichtung (3) eine horizontal verfahrbare, einen Schlitten (28) mit einem Greifarm (23) aufweisende Auszugeinrichtung (8) umfaßt, dadurch gekennzeichnet, daß die Tragstange (32) drehbar augetrieben ist und über ein Getriebe (49, 50, 57) den mit dem Greifarm (23) starr verbundenen Schlitten (28) der Auszugeinrichtung (8) antreibt.

2. Plattenabspielgerät nach Anspruch 1, dadurch gekennzeichnet, daß die gleitbeweglich auf der Tragstange (32) gelagerte Transporteinrichtung (3) über einen Riemenantrieb (34, 35) mit drehrichtungsumkehrbarem Antriebsmotor (38) auf- und abbewegbar ist.

3. Plattenabspielgerät nach Anspruch 1 oder 2, dadurch gekennzeichnet, daß die Transporteinrichtung (3) seitlich einen Einschnitt (41) aufweist, der gleitbeweglich eine vertikale, gehäusefeste Führungsstange (42) umgreift.

4. Plattenabspielgerät nach einem der Ansprüche 1 bis 3, dadurch gekennzeichnet, daß der Antriebsmotor (38) der Transporteinrichtung (3) auf seiner Welle (37) eine Codescheibe (39) trägt, die mit einem Positionsimpulse erzeugenden Sensor (40) zusammenwirkt.

5. Plattenabspielgerät nach einem der Ansprüche 1 bis 4, dadurch gekennzeichnet, daß der Transporteinrichtung (3) ein Sensor (27) zur Feststellung ihrer Ausgangsstellung unmittelbar oberhalb der Abspieleinheit (5) zugeordnet ist.

6. Plattenabspielgerät nach einem der Ansprüche 1 bis 5, dadurch gekennzeichnet, daß die drehbeweglich gelagerte Tragstange (32) der Transporteinrichtung (3) über eine Rutschkupplung (43) und das Getriebe (44) mit dem drehrichtungsumkehrbaren Antriebsmotor (45) in Verbindung steht, und daß die Tragstange (32) innerhalb der Transporteinrichtung (3) ein auf ihr verschiebbares, drehfestes Zahnrad (49) trägt, das mit mindestens einem Zahnrad (50) kämmt, das mit einer am Schlitten (28) des Greifarms (23) angebrachten Zahnstange (51) in Eingriff steht.

7. Plattenabspielgerät nach einem der Ansprüche 1 bis 6, dadurch gekennzeichnet, daß die Tragstange (32) mit einer Codescheibe (46) fest verbunden ist, die durch ortsfeste Sensoren (47) zur Erzeugung von Abschaltimpulsen für den Antriebsmotor (45) der Tragstange (32) läuft.

8. Plattenabspielgerät nach Anspruch 7, dadurch gekennzeichnet, daß die Codescheibe (46) als Loch- oder Markierungsscheibe ausgebildet ist.

9. Plattenabspielgerät nach einem der Ansprüche 1 bis 8, dadurch gekennzeichnet, daß eine Plattenhalter-Erkennungseinrichtung (26) einen im Gehäuse (24) der Transporteinrichtung (3) federbelastet geführten, in die Bewegungsbahn des Plattenhalters (4) vorstehenden mechanischen Fühler (52) umfaßt, der bei einer Beaufschlagung durch den Plattenhalter (4) die Drehbewegung des auf der Tragstange (32) angeordneten Zahnrades (49) begrenzt.

10. Plattenabspielgerät nach Anspruch 9, dadurch gekennzeichnet, daß auf der Oberseite des auf der Tragstange (32) angeordneten Zahnrades (49) ein Stift (55) vorgesehen ist, der im nichtbetätigten Zustand des Fühlers (52) durch einen Durchgang (56) in der Unterseite des Fühlers (52) bewegbar ist und der im betätigten Zustand des Fühlers (52) in der Zentrierstellung des Plattenhalters (4) zu der Abspieleinheit (5) an einem in den Durchgang (56) hineinragenden Anschlag (57) anliegt.

11. Plattenabspielgerät nach Anspruch 9 oder 10, dadurch gekennzeichnet, daß der Fühler (52) auf seiner Oberseite im vorderen Bereich einen Steg (58) aufweist, der im nichtbetätigten Zustand des Fühlers (52) federbelastet an einem gehäusefesten Anschlag (66) anliegt.

12. Plattenabspielgerät nach Anspruch 11, dadurch gekennzeichnet, daß dem gehäusefesten Anschlag (66) für den Steg (58) des Fühlers (52) ein gehäusefester Anschlag (60) im Bereich der Tragstange (32) gegenüberliegt, an dem sich eine Druckfeder (59) abstützt, die mit ihrem anderen Ende an dem Steg (58) des Fühlers (52) anliegt.

13. Plattenabspielgerät nach einem der Ansprüche 9 bis 12, dadurch gekennzeichnet, daß der auf einer Halterung (54) geführte Fühler (52) mit seinem vorderen Bereich eine gehäusefeste Führungsschiene (53) für den Plattenhalter (4) übergreift.

14. Plattenabspielgerät nach einem der Ansprüche 1 bis 13, dadurch gekennzeichnet, daß das Gehäuse (24) der Transporteinrichtung (3) einen Tragarm (25) mit einer der gehäusefesten Führungsschiene (53) gegenüberliegenden Halteschiene (61) für den Plattenhalter (4) aufweist, wobei der Halteschiene (61) mindestens ein Federelement (62) zugeordnet ist, das den Plattenhalter (4) in seiner Zentrierstellung zur Abspieleinheit (5) sichert.

15. Plattenabspielgerät nach Anspruch 14, dadurch gekennzeichnet, daß das Federelement (62) an der Halteschiene (61) angespritzt ist und in einen zugehörigen Einschnitt (65) des Plattenhalters (4) einrastet.

16. Plattenabspielgerät nach Anspruch 14, dadurch gekennzeichnet, daß das Federelement (62) aus einem U-förmigen Bügel besteht, dessen Schenkel (63) in Vertiefungen am Tragarm (25) eingesetzt sind und dessen Steg mittig eine Sicke (64) aufweist, die in einen an der entsprechenden Längsseite des Plattenhalters (4) liegenden Einschnitt (65) eingreift.

## Claims

1. Disc player, having two oppositely situated disc magazines (2), which include a plurality of disc holders (4), which are mounted in accommodation compartments (6) so as to lie one above the other, and which each accommodate one disc, and having a conveyor (3), which is displaceable on a supporting rod (32) by means of a drive means (33) in the stacking direction of the disc magazines (2), for interchanging a desired disc with the associated disc holder (4) between the accommodation compartment (6) and a player unit (5), the conveyor (3) including a horizontally displaceable extractor (8), which has a slide (28) provided with a gripping arm (23), characterised in that the supporting rod (32) is rotatably driven and drives the slide (28) of the extractor (8) via a transmission unit (49, 50, 57), said slide being rigidly connected to the gripping arm (23).

2. Disc player according to claim 1, characterised in that the conveyor (3), which is slidingly mounted on the supporting rod (32), is reciprocatable via a belt drive (34, 35) with driving motor (38), which has a reversible direction of rotation.

3. Disc player according to claim 1 or 2, characterised in that the conveyor (3) is provided laterally with an incision (41), which surrounds a vertical guide rod (42), integral with the housing, in a slidingly displaceable manner.

4. Disc player according to one of claims 1 to 3, characterised in that the driving motor (38) of the conveyor (3) is provided, on its shaft (37), with a coded disc (39) which co-operates with a sensor (40), which generates positional pulses.

5. Disc player according to one of claims 1 to 4, characterised in that a sensor (27) is associated with the conveyor (3) to determine the initial position of the conveyor directly above the player unit (5).

6. Disc player according to one of claims 1 to 5, characterised in that the rotatably mounted supporting rod (32) of the conveyor (3) communicates with the driving motor (45), which has a reversible direction of rotation, via a sliding coupling (43) and the transmission unit (44), and in that the supporting rod (32) is provided, internally of the conveyor (3), with a non-rotatable toothed wheel (49), which is displaceable on said rod and meshes with at least one toothed wheel (50), which is in engagement with a toothed rod (51) mounted on the slide (28) of the gripping arm (23).

7. Disc player according to one of claims 1 to 6, characterised in that the supporting rod (32) is securedly connected to a coded disc (46), which travels through stationary sensors (47) to generate switch-off pulses for the driving motor (45) of the supporting rod (32).

8. Disc player according to claim 7, characterised in that the coded disc (46) is configured as a perforated or marker disc.

9. Disc player according to one of claims 1 to 8, characterised in that a disc holder detector (26) includes a mechanical sensor (52), which is guided in a spring-loaded manner in the housing (24) of the conveyor (3) and protrudes into the path of displacement of the disc holder (4), said sensor defining the rotary movement of the toothed wheel (49), which is disposed on the supporting rod (32), when actuated by the disc holder (4).

10. Disc player according to claim 9, characterised in that a pin (55) is provided on the upper side of the toothed wheel (49) disposed on the supporting rod (32), said pin being displaceable through a passage (56) in the underside of the sensor (52) when the sensor (52) is in its non-actuated state, and said pin abutting against a stop member (57), which protrudes into the passage (56), in the central position of the disc holder (4) relative to the player unit (5) when the sensor (52) is in its actuated state.

11. Disc player according to claim 9 or 10, characterised in that the sensor (52) is provided, on its upper side in the front region, with a web (58) which abuts against a stop member (66), integral with the housing, in a spring-loaded manner when the sensor (52) is in its non-actuated state.

12. Disc player according to claim 11, characterised in that a stop member (60), integral with the housing, is situated opposite the stop member (66), integral with the housing, for the web (58) of the sensor (52) in the region of the supporting rod (32), a compression spring (59) being supported on said stop member and abutting with its other end against the web (58) of the sensor (52).

13. Disc player according to one of claims 9 to 12, characterised in that the sensor (52), which is guided on a holder (54), engages with its front region over a guide rail (53), integral with the housing, for guiding the disc holder (4).

14. Disc player according to one of claims 1 to 13, characterised in that the housing (24) of the conveyor (3) has a supporting arm (25) provided with a retaining rail (61) for retaining the disc holder (4), said rail being situated opposite the guide rail (53) integral with the housing, at least one resilient member (62) being associated with the retaining rail (61) and securing the disc holder (4) in its central position relative to the player unit (5).

15. Disc player according to claim 14, characterised in that the resilient member (62) is injection-moulded on the retaining rail (61) and locks in position in an associated incision (65) in the disc holder (4).

16. Disc player according to claim 14, characterised in that the resilient member (62) comprises a U-shaped strip, the portions (63) of which are inserted in recesses in the supporting arm (25), and the web of which is provided centrally with a groove (64), which engages in an incision (65) provided in the corresponding longitudinal side of the disc holder (4).

## Revendications

1. Appareil de lecture de disques avec deux magasins de disques (2) en face l'un de l'autre, qui comprennent une pluralité de porte-disques (4) disposés les uns au-dessus des autres dans des compartiments de réception (6) et recevant chacun un disque, et une installation de transport (3) déplaçable dans la direction d'empilage des magasins de disques (2) sur un montant porteur (32) au moyen d'un actionneur (33), pour l'échange d'un disque souhaité avec le porte-disque correspondant (4) entre le compartiment de réception (6) et une unité de lecture (5), l'installation de transport (3) comprenant une installation d'extraction (8) déplaçable horizontalement et comportant un chariot (28) avec un bras de prise (23), caractérisé en ce que le montant porteur (32) est entraîné en rotation et entraîne le chariot (28) de l'installation d'extraction (8) relié rigidement au bras de prise (23) au moyen d'un engrenage (49, 50, 57).

2. Appareil de lecture de disques selon la revendication 1, caractérisé en ce que l'installation de transport (3) montée mobile en coulissement sur le montant porteur (32) est déplaçable vers le haut et vers le bas par un moteur d'entraînement (38) à sens de rotation réversible au moyen d'un entraînement à courroie (34, 35).

3. Appareil de lecture de disques selon la revendication 1 ou 2, caractérisé en ce que l'installation de transport (3) comprend latéralement une entaille (41) qui entoure à coulissement une barre de guidage verticale (42) montée fixe.

4. Appareil de lecture de disques selon l'une des revendications 1 à 3, caractérisé en ce que le moteur d'entraînement (38) de l'installation de transport (3) porte sur son arbre (37) une roue de codage (39) qui coopère avec un capteur (40) produisant des impulsions de position.

5. Appareil de lecture de disques selon l'une des revendications 1 à 4, caractérisé en ce qu'à l'installation de transport (3) est associé un capteur (27) pour déterminer sa position de sortie directement au-dessus de l'unité de lecture (5).

6. Appareil de lecture de disques selon l'une des revendications 1 à 5, caractérisé en ce que le bras porteur (32) monté mobile en rotation de l'installation de transport (3) est relié au moteur d'entraînement (45) à sens de rotation réversible par un couplage glissant (43) et l'engrenage (44) et en ce que le montant porteur (32) porte à l'intérieur de l'installation de transport (3) une roue dentée (49) fixe en rotation et déplaçable sur ce montant, cette roue engrenant avec au moins une roue dentée (50) qui est en prise avec une crémaillère (51) montée sur le chariot (28) du bras de prise (23).

7. Appareil de lecture de disques selon l'une des revendications 1 à 6, caractérisé en ce que le montant porteur (32) est relié fixement à une roue codeuse (46) qui tourne dans des capteurs fixes (47) pour produire des impulsions de coupure du moteur d'entraînement (45) du montant porteur (32).

8. Appareil de lecture de disques selon la revendication 7, caractérisé en ce que la roue codeuse (46) est constituée d'une roue à trous ou à marques.

9. Appareil de lecture de disques selon l'une des revendications 1 à 8, caractérisé en ce qu'une installation (26) de reconnaissance de porte-disque comprend un détecteur mécanique (52) guidé avec un rappel élastique dans le bâti (24) de l'installation de transport (3) et faisant saillie sur le trajet du porte-disque (4), ce détecteur limitant le mouvement de rotation de la roue dentée (49) agencée sur le montant porteur (32) lors d'une sollicitation par le porte-disque (4) .

10. Appareil de lecture de disques selon la revendication 9, caractérisé en ce que sur le côté supérieur de la roue dentée (49) agencée sur le montant porteur (32) est prévu un doigt (55) qui est déplaçable à l'état non actionné du détecteur (52) à travers un passage traversant (56) du côté inférieur du détecteur (52) et qui se trouve à l'état actionné du détecteur (52) dans la position de centrage du porte-disque (4) sur l'unité de lecture (5) en appui sur une butée (57) faisant saillie dans le passage traversant (56).

11. Appareil de lecture de disques selon la revendication 9 ou 10, caractérisé en ce que le détecteur (52) comporte sur son côté supérieur dans sa partie avant un téton (58) qui à l'état non actionné du détecteur (52) est sollicité élastiquement en appui sur une butée (66) fixe.

12. Appareil de lecture de disques selon la revendication 11, caractérisé en ce au'en face de la butée fixe (66) pour le téton (58) du détecteur (52) se trouve une butée fixe (60) située dans la zone du montant porteur (32) et sur laquelle s'appuie un ressort de compression (59) qui s'appuie par son autre extrémité sur le téton (58) du détecteur (52).

13. Appareil de lecture de disques selon l'une des revendications 9 à 12, caractérisé en ce que le détecteur (52) guidé sur un support (54) s'étend par sa partie avant sur une barre fixe (53) de guidage du porte-disque (4) .

14. Appareil de lecture de disques selon l'une des revendications 1 à 13, caractérisé en ce que le bâti (24) de l'installation de transport (3) comprend un bras (25) avec une barre d'arrêt (61) pour le porte-disque (4) qui se trouve en face de la barre de guidage fixe (53), la barre d'arrêt (61) étant associée à au moins un élément de ressort (62) qui assure le porte-disque (4) dans sa position de centrage sur l'unité de lecture (5).

15. Appareil de lecture de disques selon la revendication 14, caractérisé en ce que l'élément de ressort (62) est injecté sur la barre d'arrêt (61) et s'enclenche dans une entaille correspondante (65) du porte-disque (4) .

16. Appareil de lecture de disques selon la revendication 14, caractérisé en ce que l'élément de ressort (62) comprend une pièce courbe en forme de U, dont les branches (63) sont engagées dans des renfoncements du bras (25) et dont la barre comporte au milieu une saillie (64) qui s'engage dans une entaille formée dans le côté longitudinal correspondant du porte-disque (4).
